# EUROPEAN PATENT APPLICATION

(11) **EP 1 021 005 A2**
(43) Date of publication of application: **19.07.2000**
(21) Application number: 99308712.1
(22) Date of filing: 02.11.1999
(51) Int. Cl.: H04H 1/00, H04N 5/445

(54) **Apparatus and method for automatically setting on-screen-display language in digital broadcasting signal receiver**

(30) Priority: 16.01.1999 KR 9901210
(71) Applicant: SAMSUNG ELECTRONICS CO., LTD., Suwon-City, Kyungki-do (KR)
(72) Inventor: Lim, We-Cheol, Paldal-gu, Suwon-city, Kyungki-do (KR); Kim, Soo-Won, 248-805, Ssangyong Apt., Suwon-city, Kyungki-do (KR)
(74) Representative: Robinson, Ian Michael

(57) **Abstract**

A digital broadcasting signal receiver automatically sets an language for on-screen-display (OSD) such as a menu. The digital broadcasting signal receiver includes a broadcasting signal receiver for receiving a digital broadcasting signal and OSD language setting means provided by the digital broadcasting signal receiver, based on data output from the broadcasting signal receiver.

## Description

The present invention relates to an automatic language setting technology for an on-screen-display (OSD) function, and more particularly, to a method for automatically setting OSD language such as menus to be displayed in a digital broadcasting signal receiver, and a digital broadcasting signal receiver therefor.

In general, a broadcasting signal receiver such a TV set or a set-top box is designed to have language for a default audio or OSD set during an initial setting. Thus, when an electric power is applied to a general broadcasting signal receiver, a menu is on-screen-displayed on the broadcasting signal receiver in the language which was initially set in a manufacturing company. Then, according to request of a user, an OSD function is provided to alter the set language.

Thus, in the case that a manufacturing company sets the target country in producing products, and sells the produced products which is set in the language of the target country to another country using different language, the previously set OSD language should be altered at the time of sale at the latest. Further, each product should be kept in custody according to a set language for sale in each country in a warehouse keeping products for sale in various countries using a respectively different language.

It is an aim of at least preferred embodiments of the present invention to provide a digital broadcasting signal receiver employing a method for automatically setting an OSD language into a language of a country where a broadcasting signal receiver will be installed without any particular manipulation by a user or a seller.

It is another aim to provide a method for automatically setting an OSD language into a language of a country where a broadcasting signal receiver will be installed without any particular manipulation by a user or a seller.

According to the present invention there is provided a digital broadcasting signal receiver as set forth in claim 1 appended hereto and an apparatus as set forth in claim 5 appended hereto. Also according to the present invention there is provided a method for setting an on-screen-display language as set forth in claim 6 or 9 appended hereto. Preferred features of the present invention will be apparent from the dependent claims and the description which follows.

According to one aspect of the present invention there is provided a digital broadcasting signal receiver for setting an OSD language, the digital broadcasting signal receiver comprising: a broadcasting signal receiver for receiving a digital broadcasting signal; and means for automatically setting an OSD language provided by the digital broadcasting signal receiver, based on data output from the broadcasting signal receiver.

Preferably, said broadcasting signal receiver comprises: a receiver for receiving a transmitted digital broadcasting signal and/or for receiving a digital cable broadcasting signal; and said OSD language setting means includes a memory for storing a plurality of font data and a processor for comparing the data received by said receiver with a plurality of the font data which has been pre-stored in said memory and setting an OSD language.

Preferably, said processor sets the OSD language as a default language in the case that font data corresponding to the received data does not exist.

Preferably, said OSD setting means further includes a memory for storing audio data for providing a help message with respect to a current OSD.

According to another aspect of the present invention there is provided an apparatus for use in a digital broadcasting signal receiver including means for receiving a digital broadcasting signal, the apparatus comprising: OSD language setting means for setting an on-screen-display language based on data output from the digital broadcast signal receiving means.

According to yet another aspect of the present invention, there is provided a method for setting an OSD language in a digital broadcasting signal receiver, the method comprising the steps of: (a) receiving a transmitted digital broadcasting signal; and (b) comparing the received data in step (a) with a plurality of font data which is pre-stored to set an OSD language provided by the broadcasting signal receiver.

According to a further aspect of the present invention, there is provided a method for setting an OSD language in a digital broadcasting signal receiver, the method comprising the steps of: (a1) reading data contained in a broadcasting signal receiver to transmit a broadcasting signal; and (b1) setting an OSD language by using the contained data read in step (a1) and a plurality of font data which has been pre-stored.

For a better understanding of the invention, and to show how embodiments of the same may be carried into effect, reference will now be made, by way of example, to the accompanying diagrammatic drawings in which:
Figure 1 is a block diagram showing a digital broadcasting signal receiver according to a preferred embodiment of the present invention; and
Figure 2 is a flow-chart view for explaining the operation of the broadcasting signal receiver shown in Figure 1.

A preferred embodiment of the present invention will be described with reference to the accompanying drawings.

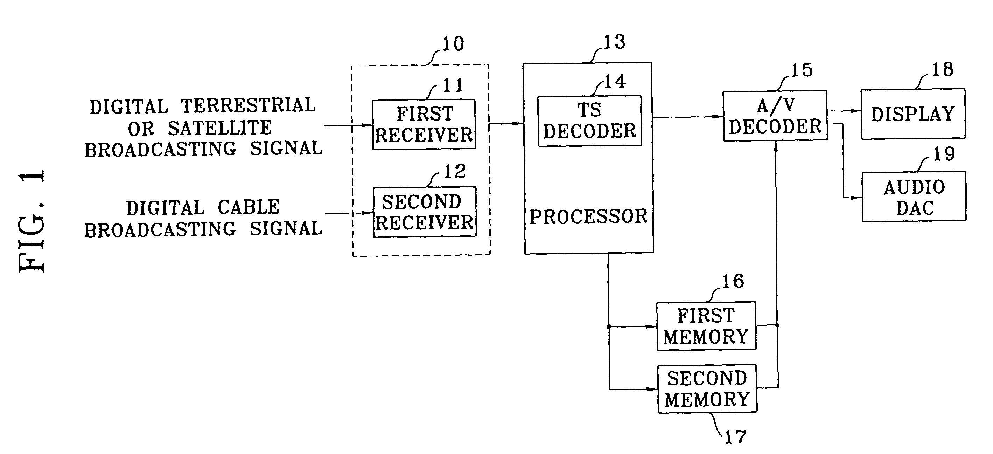

Referring to Figure 1 showing a digital broadcasting signal receiver according to a preferred embodiment of the present invention, the digital broadcasting signal receiver includes a broadcasting signal receiver 10, a processor 13, an audio/video (A/V) decoder 15, memories 16 and 17, a display 18 and an audio digital-to-analog-converter (DAC) 19.

The broadcasting signal receiver 10 includes a first receiver 11 for receiving a digital terrestrial broadcasting signal or a digital satelite broadcasting signal, and a second receiver 12 for receiving a digital cable broadcasting signal. The processor 13 includes a TS (transport stream) decoder 14 for decoding a TS stream supplied from the broadcasting signal receiver 10. The TS decoder 14 performs parsing with respect to the TS stream. The processor 13 classifies the language used in a region where the Figure 1 apparatus is installed, using a parsed result of the TS stream in the TS decoder 14. The first memory 16 stores a plurality of font data individually corresponding to a plurality of languages, and supplies the font data corresponding to the language classified in the processor 13 to the A/V decoder 15. The second memory 17 stores OSD data, for example, video and audio data for a menu and user manual. The second memory 17 stores a plurality of video and audio data individually corresponding to a plurality of font data stored in the first memory 16. Among the data stored in the second memory 17, the video data is used for displaying the OSD data such as a menu and user manual and the audio data is used for providing explanations with respect to the OSD data. The second memory 17 supplies the stored video and audio data to the A/V decoder 15 under the control of the processor 13.

The A/V decoder 15 source-decodes the encoded video and audio data supplied from the processor 13 and supplies the resultant video data and audio data to the display 18 and the audio DAC 19, respectively. In the case that the OSD data should be displayed on the display 18, the A/V decoder 15 makes up OSD data using the font data set under the control of the processor 13 among a plurality of font data which has been pre-store in the first memory 16, and supplies the OSD data to the display 18. Also, in the case that a user selects a help key or help button and needs an explanation with respect to the OSD data, the A/V decoder 15 receives the audio data from the second memory 17, signal-processes the audio data and supplies the result to the audio DAC 19.

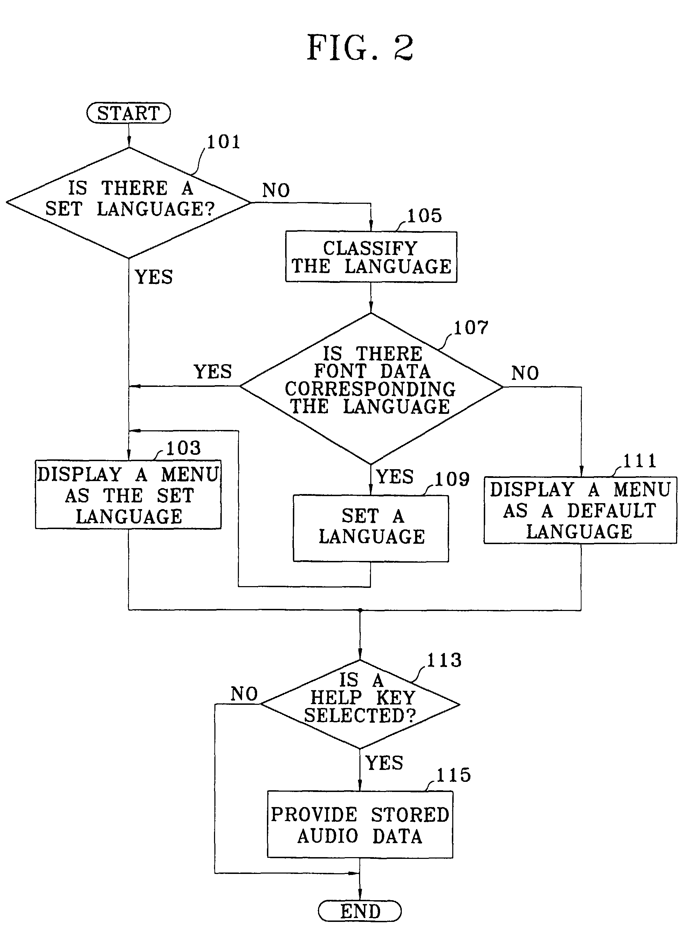

The method for selecting font data and providing a help message in the form of audio in the Figure 1 apparatus will be described below with reference to the flow-chart view of the Figure 2.

If the Figure 1 apparatus starts to provide an OSD function, the processor 13 judges whether a set language exists based on a value of the stored language code (step 101). If the Figure 1 apparatus has been set to use a particular language for an OSD function, the processor 13 displays a menu in the set language (step 103). In step 103, font data corresponding to the set language is selected from the first memory 16 and the selected font data is used in the A/V decoder 15.

If it is judged that no set language exists in sep 101, the processor 13 classifies the language used in a region where the Figure 1 apparatus is installed (step 105). For this purpose, the processor 13 uses the data output from the TS decoder 14, in which data in a program title, a program descriptor, etc., is used for language classification. The processor 13 compares the above data with a plurality of the font data which has been pre-stored in the first memory 16, to classify the language used in the region where the Figure 1 apparatus is installed. Also, data contained in the second receiver 12, that is, data contained in a PCMCIA card for receiving a cable broadcasting signal installed in the second receiver 12 is used for language classification. For example, in the case that a language code contained in the PCMCIA card is used for language classification, the processor 13 compares the language codes provided from language code table incorporated therein with a language code incorporated in the PCMCIA card, to thereby determine the language used in a region where the Figure 1 apparatus is installed. The processor 13 judges whether font data corresponding to the classified language exists (step 107). In step 107, if the font data corresponding to the classified language exists, the language is set as a OSD providing language and then stores it (step 109) and proceeds to step 103. Meanwhile, if no font data corresponding to the classified language exists, a default menu determined at the time of manufacturing or supply of a product is displayed (step 111).

The processor 13 determines whether a user selects a help key such as by using a remote controller (not shown) (step 113). If the user selects the help key, the processor 13 controls the second memory 17 to provide a corresponding help message. Then, the second memory 17 supplies audio data for the corresponding help message to the A/V decoder 15 (step 115).

The embodiment of the present invention has been described with respect to the OSD to be displayed on a screen. Since a language setting for the OSD does not limit the present invention, it is apparent to a person who has an ordinary skill in the art that many modifications or variation are possible with respect to a variety of user interfaces or on-screen-display which are expressed as a particular language.

As described above, the apparatus and method for automatically setting an OSD language according to the present invention uses a received broadcasting signal or data contained in a card for receiving a cable broadcasting signal, to thereby provide an effect of automatically providing a menu in a language used in a region where a broadcasting signal receiver is installed, without making any separate efforts.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A digital broadcasting signal receiver for setting an on-screen-display (OSD) language, the digital broadcasting signal receiver comprising:
a broadcasting signal receiver (10) for receiving a digital broadcasting signal; and
means (13) for automatically setting an OSD language provided by the digital broadcasting signal receiver, based on data output from the broadcasting signal receiver.

2. The digital broadcasting signal receiver according to claim 1, wherein said broadcasting signal receiver comprises: a receiver (10) for receiving a transmitted digital broadcasting signal and/or for receiving a digital cable broadcasting signal; and said OSD language setting means (13) includes a memory (16) for storing a plurality of font data and a processor for comparing the data received by said receiver with a plurality of the font data which has been pre-stored in said memory (16) and setting an OSD language.

3. The digital broadcasting signal receiver according to claim 2, wherein said processor (13) sets the OSD language as a default language in the case that font data corresponding to the received data does not exist.

4. The digital broadcasting signal receiver according to any of claims 1 to 3, wherein said OSD setting means further includes a memory (17) for storing audio data for providing a help message with respect to a current OSD.

5. An apparatus for use in a digital broadcasting signal receiver including means for receiving a digital broadcasting signal, the apparatus comprising:
OSD language setting means for setting an on-screen-display language based on data output from the digital broadcast signal receiving means.

6. A method for setting an on-screen-display (OSD) language in a digital broadcasting signal receiver, the method comprising the steps of:
(a) receiving a transmitted digital broadcasting signal; and
(b) comparing the received data in step (a) with a plurality of font data which is pre-stored to set (109) an OSD language provided by the broadcasting signal receiver.

7. The OSD language setting method according to claim 6, wherein said step (b) comprises the step of (c) setting (111) the OSD language as a default language in the case that font data corresponding to the received data does not exist.

8. The OSD language setting method according to claim 6 or 7, further comprising the step of (d) providing (115) a help message with respect to a current OSD by using audio data corresponding to the set language among a plurality of audio data which has been pre-stored.

9. A method for setting an on-screen-display (OSD) language in a digital broadcasting signal receiver, the method comprising the steps of:
(a1) reading data contained in a broadcasting signal receiver to receive a broadcasting signal; and
(b1) setting an OSD language by using the contained data read in step (a1) and a plurality of font data which has been pre-stored.
